(19)

Europäisches
Patentamt
European
Patent Office
Office européen
des brevets

(11) **EP 3 001 329 A1**

(12) **EUROPEAN PATENT APPLICATION**

(43) Date of publication:
**30.03.2016 Bulletin 2016/13**

(51) Int Cl.:
***G06F 17/30*** *(2006.01)*

(21) Application number: **14186396.9**

(22) Date of filing: **25.09.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **FUJITSU LIMITED
Kawasaki-shi,
Kanagawa 211-8588 (JP)**

(72) Inventor: **Hu, Bo
Winchester, Cambridgeshire SO22 5EG (GB)**

(74) Representative: **Hutchison, James
Haseltine Lake LLP
300 High Holborn
London, Greater London WC1V 7JH (GB)**

<u>Remarks:</u>
Amended claims in accordance with Rule 137(2)
EPC.

(54) **Method, controller, program and data storage system for performing reconciliation processing**

(57)    Embodiments include a method for reconciling a target data node with a data graph encoding a plurality of interconnected data nodes. The method comprises filtering an initial candidate set of data nodes from among the plurality of interconnected data nodes by performing a partial comparison process of a member of the initial candidate set with the target data node. The partial comparison process comprises using a first set of hash functions to compare a first set of features extracted from each of the member and the target data node, and if the outcome of the partial comparison process satisfies one or more removal criteria, removing: the member from the initial candidate set; and any other members from the initial candidate set assessed as having a semantic similarity with the member above a semantic similarity threshold. The partial comparison process further comprises repeating the performing, and removing on condition of the removal criterion being satisfied, until each remaining member of the initial candidate set has had the partial comparison process with the target data node completed. The method further comprises performing full comparison processing between the target data node and each remaining member of the initial candidate set following the filtering, the full comparison processing comprising using a second set of hash functions to compare a second set of features extracted from both the remaining member and the target data node. Wherein the second set of hash functions contains more hash functions than the first set of hash functions.

FIGURE 1

**Description**

The present invention lies in the field of data storage and the associated processing. Specifically, embodiments of the present invention relate to the performance of reconciliation processing of nodes in graph data. The reconciliation processing is intended to reconcile heterogeneity between semantically equivalent resources in the graph.

The enormous volume of graph data available creates potential for automated or semi-automated analysis that can not only reveal statistical trends but also discover hidden patterns and distil knowledge out of data. Formal semantics plays a key role in automating computation-intensive tasks. While there is a longstanding battle over how semantics are best captured, it is widely regarded that graphs and graph-like representations are the best instrument to emulate how humans perceive the world (as an ontology with entities and relationships among entities).

Data sets may be generally highly heterogeneous and distributed. The decentralised nature of such data leads to the issue that often many data sources use different references to indicate the same real world object. A necessary and important step towards utilising available graph data effectively is to identify and reconcile multiple references for semantic consistence. Hereinafter, the term "reconciliation" is used to indicate the process of reconciling heterogeneity between resources (as nodes in a graph of data, for example, as the subject or object of RDF triples) by identifying and defining equivalence links among resources that correspond semantically to each other. It follows that "reconciliation processing" is the execution of algorithms and instructions by a processor in order to achieve reconciliation.

The significance of data reconciliation is evident. Data reconciliation ensures data integrity when heterogeneous data sets are linked (resulting in semantic variety in data). Meaningful analysis cannot be performed otherwise. Meanwhile, equivalencies allow applications to align with each other. Communications among the applications can, therefore, be automated and delegated to computers.

Data reconciliation is a challenging research topic in very large databases and large-scale knowledge bases. Hereinafter, knowledge bases are used to refer to data repositories with predefined schemata, e.g. ontologies and relational database schemata. Conducting data reconciliation with full linear comparison to every node is not practical for large-scale knowledge bases. Such comparison approaches involve estimating the similarity / distance of every pair of data items where the similarity / distance computation of each pair can be time consuming and computationally intensive. This is partially because, in order to compute the similarities, high dimensional feature vectors are employed. Linear comparison results in a large number pair-wise comparison of high dimensional vectors.

Recent development in semantic web technology has not alleviated such an issue. Currently semantics are explicated through either extent based or intent based approaches. Extent based approaches project the semantics through concrete instances / references of the data item whereas intent based ones rely on the so-called formal definitions (with well-defined logic or mathematical languages) of the data items. The reconciliation is then done by projecting concrete references and/or formal definitions from both data items to a numeric number (as the quantitative representation of the similarity or distance).

For large-scale knowledge bases with million or even billions of data items (e.g. the Linked Open Data or National Consensus Database), in particular the online databases, linear comparison of every pair of data items becomes impractical.

Embodiments include a method for reconciling a target data node with a data graph encoding a plurality of interconnected data nodes. The method comprises: filtering an initial candidate set of data nodes from among the plurality of interconnected data nodes by: performing a partial comparison process of a member of the initial candidate set with the target data node, the partial comparison process comprising using a first set of hash functions to compare a first set of features extracted from each of the member and the target data node; and if the outcome of the partial comparison process satisfies one or more removal criteria, removing: the member from the initial candidate set; and any other members from the initial candidate set assessed as having a semantic similarity with the member above a semantic similarity threshold; and repeating the performing, and removing on condition of the removal criterion being satisfied, until each remaining member of the initial candidate set has had the partial comparison process with the target data node completed. The method further comprises: performing full comparison processing between the target data node and each remaining member of the initial candidate set following the filtering, the full comparison processing comprising using a second set of hash functions to compare a second set of features extracted from both the remaining member and the target data node; wherein the second set of hash functions contains more hash functions than the first set of hash functions.

Advantageously, embodiments of the present invention utilise semantic similarity between data nodes to identify those data nodes for which full comparison processing will not be performed. The processing overhead imposed by reconciliation processing is reduced compared with a method in which a full comparison between a target data node and each member of a set of candidate data nodes is performed. A partial comparison process is carried out to identify data nodes from an initial candidate set that appear sufficiently different from the target data node that proceeding with the full comparison process would have such a slim chance of resulting in an equivalence link being formed that it is deemed not to be worthwhile, and those data nodes are removed from the candidate set. However, rather than removing only the node for which the partial comparison processing has been performed, the initial candidate set is checked for any data nodes having a high (that is, above a threshold) level of semantic similarity to the node selected for removal, and those data nodes are also removed. Semantic similarity provides a means for broadening the scope of the removal (from the initial candidate set and thus from any further reconciliation processing) to include not only the data node selected for removal by the partial comparison processing, but also data nodes determined to be sufficiently semantically similar to the data node selected for removal. Therefore, both the partial comparison process and the full comparison processing are streamlined by the removal of some data nodes from the initial candidate set.

Embodiments include a method for performing reconciliation processing of a target data node with a plurality of data nodes belonging to a graph, in which filtering processing is performed to identify any of the plurality of data nodes assessed as having a probability of being determined to be equivalent to the target data node that is below a threshold probability. No further reconciliation processing between the identified data nodes and the target data node is carried out. Furthermore, data nodes assessed as having a semantic similarity with an identified data node that is above a threshold are also precluded from having any further reconciliation processing carried out with the target data node. The target data node may be data being newly added to the data graph. Alternatively, the target data node may have already been added to the data graph, but the reconciliation processing left pending, for example, due to required resources being occupied at the time of addition.

Reconciliation of resources is a process for reconciling heterogeneity between resources in a graph by identifying and producing equivalence links between resources (represented by nodes in the graph) which correspond to one another semantically. For example, where two resources having different names refer to the same real-world object (i. e. the two resources are semantically equivalent/equivalent in meaning), it would be appropriate to add a link to the graph indicating that the two resources are equivalent. Reconciling resources may include identifying where equivalences exist between resources (graph nodes are a resource), and adding an indication of the equivalence to the graph. The identification of multiple resources or representations of the same real world entity is also known as ontology mapping, ontology matching, or ontology alignment.

Reconciling a target data node with a data graph includes identifying any data nodes in the data graph which are semantically equivalent to the target data node, and adding the target data node to the data graph with links indicating said semantic equivalence. The processing required to identify any data nodes which are semantically equivalent is a significant performance overhead in data graph systems. Methods embodying the present invention provide a mechanism to identify data nodes from a candidate set for which the probability of them being determined to be semantically equivalent to the target data node is sufficiently small that to perform further reconciliation processing is an inefficient use of resources, and so they are removed from the candidate set. The inventors have devised a novel combination of a partial comparison process and a policy of removing from an initial candidate set not only data nodes identified for removal by the partial comparison process, but also those data nodes deemed to be semantically similar (or to have a level of semantic similarity above a threshold) to the data node or nodes identified for removal.

The initial candidate set may be every data node in the data graph, or may be, for example, every data node of a certain type, such as instances. The initial candidate set may also be referred to as the candidate set, the reconciliation candidate set, or the equivalence candidate set. The filtering is a procedure for identifying the least promising candidates for equivalence and removing them from the initial candidate set. The hash functions used in the filtering and in the full comparison processing may be locality sensitive hash functions, that is to say, hash functions which reduce the diversity in a population being hashed. In other words, the number of 'bins' into which the hash function divides data nodes is smaller than the range of possible values of the feature on which the hash function is being performed. Conceptually, using hash functions to filter candidates can be seen as using the hash functions to project candidates to locations, and identifying those projected to the same location as the target data node by the same hash functions. As a particular example of the composition of the initial candidate set: the data graph comprises a first group of data nodes defining a data model and a second group of data nodes defining instances of the first group of nodes; and the initial candidate set is the second group of data nodes.

A data node may be represented as a vector of features. Methods may include a process of analysing data nodes and extracting values for each of a number of predetermined properties of the data node, those extracted values being features. A first set of features is used for partial comparison processing and a second set of features is used for full comparison processing. Optionally, the first set of features and the second set of features are the same for each data node. In other words, it may be that a single set of features is extracted from each data node and used for both partial comparison processing and full comparison processing. Alternatively, it may be that the second set of features is more extensive than the first set of features, or vice-versa.

Optionally, the first set of features and the second set of features are the same.

A data graph may be represented as a plurality of data nodes interconnected by edges. A data node may be the sum of all the relationships represented by edges on the graph that connect to/from the node, and/or may include information in addition to the relationships represented by edges on the graph. The data graph may be encoded as triples, for example, RDF triples.

The data in the graph may be referred to as "connected data", "graph data", "linked data", or "related data", amongst other phrases - all of which are intended to reflect the conceptual structure of a graph as a plurality of nodes interconnected by arcs. In certain implementations, the data in the graph may be "linked data" as in data provided as part of the "Open Linked Data" (LOD) initiative - although embodiments of the present invention are not restricted to such implementations, and the term "linked data" may be interpreted more broadly than only data provided as part of the LOD initiative.

The removal criteria are one or more ways of determining, based on the results of some or all of the first set of hash functions, whether or not the chance of a member of the candidate set being determined to be semantically equivalent to the target data node is sufficiently high to justify the performance overhead of continuing with reconciliation processing for that member. Whichever form the removal criteria take, if one or more (whichever number need to be satisfied to initiate removal from the candidate set) are satisfied by the outcome of the partial comparison processing of a member against the target data node, the member is identified for removal from the initial candidate set. The identification of a member for removal triggers a semantic comparison of all remaining members of the candidate set with the member identified for removal, and any deemed sufficiently similar are also removed from the candidate set.

The partial comparison process is partial in the sense that there are fewer hash functions performed per member of the initial candidate set than in the subsequent full comparison processing. The subsequent full comparison processing may be considered to be full comparison processing when considered in relation to the partial comparison processing, because there are more hash functions performed in a comparison between two data nodes in the full comparison processing than in the partial comparison processing. In certain embodiments, the partial comparison processing may be stopped for a member as soon as one of the removal criteria is met, without executing any remaining hash functions from the first set of hash functions.

Removing a member from the initial candidate set means that no further reconciliation processing will be performed between the removed data node and the target data node. It is equivalent to adding members for which no removal criteria are satisfied, and are assessed as having semantic similarity with each of the removed data nodes that is below a threshold, to a list of members for which full comparison processing will be performed.

There are a number of established techniques for assessing the semantic similarity between two graph data nodes, any of which can be usefully employed in embodiments. Specific decisions as to which technique to select may be made in dependence upon the implementation requirements of the embodiment. Exemplary techniques will be set out later in this document. The any other members from the initial candidate set (which are assessed for semantic similarity with the removed member) are any members remaining in the initial candidate set other than the member for which the one or more removal criteria have been satisfied. Thus, the semantic similarity between the member for which the one or more removal criteria have been satisfied and each member remaining in the initial candidate set is assessed, and those having a semantic similarity above a threshold removed from the initial candidate set.

The full comparison processing may be a full linear comparison process, and is a procedure for determining whether or not two data nodes (a remaining member of the initial candidate set and the target data node) are equivalent. Many techniques exist for using the results of hash functions to determine whether or not two data nodes are equivalent, and the choice of particular technique will depend upon the particular implementation requirements.

The outcome of the partial comparison process may take the form of, for example, a number of subsets of hash functions from the first set of hash functions that were executed on the member before a subset was found for which the results matched the results generated by executing the same subset on the target data node. Alternatively, the outcome of the partial comparison process may take the form of a number of hash functions out of the first set of hash functions for which the result generated for the member matches the result generated for the target data node. Alternatively or additionally, it may be that one or more hash functions generate results that can be assessed for closeness (i.e. so that adjacent values indicate that the feature(s) hashed by the hash function are closer than values further apart) so that an overall score assessing the closeness of the results for the member and the target data node can be generated and assessed against one or more removal criteria. Embodiments may vary in terms of how many of the removal criteria need to be met for the criteria to be deemed to be satisfied.

An exemplary partial comparison process comprises a subset result matching procedure including: selecting a subset of hash functions from the first set of hash functions; and obtaining the results of executing the subset of hash functions on the first set of features of the member and the results of executing the subset of hash functions on the first set of features of the target data node; wherein the subset result matching procedure is performed on a repeated basis selecting a different set of hash functions on each repetition for the same member, until: the results obtained for the member and the results obtained for the target data node for the same subset of hash functions satisfy a matching criterion; or a predetermined upper limit on the number of repetitions of the subset result matching procedure for a single member is reached. Exemplary removal criteria include one or more of the following: the predetermined upper limit on the number of repetitions of the subset result matching procedure for a single member is reached for the member without satisfying the matching criterion; and the matching criteria is satisfied, and an assessment of the aggregated results of the selected subsets of hash functions executed on the first set of features of the member compared with the results of the same hash functions executed on the first set of features of the target data node indicates that a probability of the member and the target data node being equivalent is below a predetermined threshold probability.

The subset result matching procedure provides a mechanism to assess the similarity of the member and the target data node using a small sample (the subset) of the first set of hash functions. If a subset of hash functions is found which generates the same results for the member and for the target data node, then the subset result matching procedure for that member is stopped. Optionally, the subset result matching procedure being stopped means that the partial comparison processing for that member is completed, however, embodiments exist in which further partial comparison processing is performed.

If a predetermined upper limit on the number of subsets used in the subset result matching procedure is reached without a subset being found for which the matching criterion is satisfied, then it is an indication that the probability of the member and data node being found to be semantically equivalent is sufficiently low that the processing overhead of full comparison processing for that member is not justified. Hence, in that case, a removal criterion is deemed to be satisfied.

The matching criterion may be that the results must match. For example, the results of executing the subset of hash functions on the first set of features of the member may be concatenated into a result string, and the results of executing the subset of hash functions on the first set of features of the target data node may be concatenated, in the same order, into a result string, and the two compared. If the two match, then the matching criterion is satisfied. Alternatively, there may be some tolerance in the matching criterion, so that there is a predetermined maximum number or proportion of hash functions in the subset that are allowed to generate different results for the member and the target data node and the matching criterion will be deemed to be met.

The number of hash functions per subset and the upper limit on the number of repetitions of the subset result matching procedure for a single member are both predetermined before reconciliation processing for a particular target data node is undertaken, but may be configurable as a system property or as an input argument to the request for reconciliation processing. In the case of the number of hash functions per subset, a higher number will result in a more selective partial processing which in which it is harder to meet the matching criterion and thus easier to reach the upper limit on the number of repetitions of the subset result matching procedure for a single member and thus satisfy a removal criterion. In the case of the upper limit on the number of repetitions of the subset result matching procedure for a single member, on the other hand, a higher number will result in a less selective process, but will reduce the chance of "false negatives", that is, members satisfying the removal criterion that were actually equivalent to the target data node and hence should not have been removed.

The removal criterion which includes an assessment of the aggregated results of the selected subsets of hash functions executed on the first set of features of the member with the results of the same hash functions executed on the first set of features of the target data node provides an additional check which may filter out (i.e. lead to the removal from the initial candidate set of) some members which were fortunate in satisfying the matching criterion. For example, if a member generated completely different results from the target data node for the first three subsets of hash functions, and then the same results as the target data node for the fourth subset, it may be that the two are not particularly similar and that therefore, full comparison processing is not merited. A comparison of the aggregated hash function results in order to generate a probability of an equivalence match provides a fallback removal criterion for such circumstances.

The indication of probability of the member and the target data node being equivalent may be considered to be an assessment of the probability that the full comparison processing will result in the member and the target data node being determined to be equivalent. For example, the probability may be generated by performing a hypothesis test using a polynomial distribution, testing the hypothesis of obtaining the obtained level of agreement (i.e. x out of the total number of hash functions in the first set being matched) or less based on the assumption that the data nodes are equivalent. Alternatively, the probability may be generated by assessing (again using a polynomial distribution or equivalent) the likelihood of two randomly selected data nodes obtaining the obtained level of agreement or less (with one minus said likelihood being the indication for comparison with the threshold).

Alternatively or additionally, If the matching criterion is satisfied by the subset results matching procedure for a member, then the member is added to a group for further partial comparison processing, and the partial comparison process may further comprise: for each of the members added to the group for further partial comparison processing: obtaining the results of executing the first set of hash functions on the first set of features of the member and obtaining the results of executing the first set of hash functions on the first set of features of the target data node, comparing the respective obtained results, and generating an indication of the probability of the member and the target node being equivalent based on the comparison, and if the indication is below a predetermined threshold probability a removal criterion is determined to have been satisfied.

The process set out above enables a staggered or staged (as in, performed stage-by-stage) partial comparison process, in which only those members for which a subset of the first set of hash functions generated the same results (or sufficiently similar) as the target data node having the full first set of hash functions executed on them. Thus, there are two stages of partial comparison processing at which members may be removed from the initial candidate set. Firstly, the subset matching procedure results in the removal of some candidates, and then any members not being removed from the initial candidate set by virtue of not meeting the matching criterion in the subset results matching procedure (or being assessed as being semantically similar to a member which did not satisfy the matching criteria) having further partial comparison processing performed and the outcome assessed against a further removal criterion. Advantageously, the staggered or staged approach set out above provides an initial screening mechanism, in which as soon as a subset of hash functions is executed which produces the same result for the member and the target data node, the member is put forward for further partial comparison processing (as long as it is not found to be semantically similar to a member which did not match any hash function results with the target data node). The rationale is that the members for which no hash function subset results matched those of the target data node will almost certainly not be determined to be found to be equivalent to the target data node in a full comparison process. Therefore, extracting the members that are semantically similar from said members at a time when potentially no hash functions have been executed on them, the overall processing overhead can be reduced.

Each hash function acts on one or more features of a data node to generate a result. The hash functions in this document may be locality sensitive hash functions. Libraries of hash functions for the purpose of comparing data nodes are available, and at the database administrator level some selection of hash functions for each set of hash functions may be required as a preparatory step for embodiments. The selection of hash functions is a separate field of study, however, the relative sizes and memberships of the sets of hash functions are configurable parameters in embodiments. The second set of hash functions is larger than the first set of hash functions. For the purposes of this document, the same hash function executed multiple times on different features from the same data node is considered to be multiple hash functions. In a particular example, the first set of hash functions is a subset of the second set of hash functions.

Advantageously, such a relation between the two sets of hash functions enables hash function results from the partial comparison processing of a particular member to be used in the full comparison processing of the same member, and therefore to reduce the total number of hash functions executed on the member. The hash functions may be selected from the min-hash family for Jaccard similarity.

The procedure for assessing semantic similarity between members of the initial candidate set and using the assessments to decide whether or not to remove members from the initial candidate set may use a static similarity threshold. That is to say, when a data node is found which satisfies the removal criteria, and hence the data node is to be removed from the initial candidate set, the similarity between the data node to be removed and each other members of the initial candidate set is assessed, and any member assessed as having a semantic similarity with the data node to be removed that is above a static threshold are also removed from the initial candidate set.

Alternatively or additionally, it may be that in some or all instances there is some elasticity to the threshold. For example, a range of possible threshold values may be defined, with the actual threshold value selected in each instance being dependent on the outcome of the partial comparison process performed for the member in question. For example, if the partial comparison process includes a comparison of the results of the first set of hash functions executed on the member with the same hash functions executed on the target data node, and an indication of the probability of the two being determined to be equivalent generated based on that comparison, then the indication may be used as the basis upon which a value from the range is selected. For example, the semantic similarity threshold may be determined dynamically in dependence upon a probability of the member and the target data node being equivalent indicated by the partial comparison process.

Advantageously, enabling some variation in the threshold means that data nodes which, based on the partial comparison processing, appear very unlikely to be determined to be equivalent to the target data node need to be assessed as being relatively less semantically similar to another member for that another member to be removed from the initial candidate set. On the other hand, if it is determined that a member satisfies the removal criteria but is not quite as unlikely to be determined to be equivalent to the target data node than in the first case, then there is relatively less flexibility, and hence the required level of semantic similarity required for another member to be removed is relatively higher. Hence, the semantic similarity threshold may vary within a predetermined range in dependence upon an inverse proportion or a negative proportion to the probability of the member and the target data node being equivalent indicated by the partial comparison process.

Reconciliation processing represents a performance overhead due to its use of processing resources. Flexibility in scheduling of reconciliation processing is desirable since it avoids monopolising resources at times when other processes are in need of them, and enables the system to perform reconciliation processing tasks at times when resources would otherwise be idle. Embodiments may perform reconciliation as an iterative process in which:the filtering and full comparison processing are performed as a first iteration and the method further comprises one or more additional iterations of the filtering and full comparison processing. In those additional iterations, the initial candidate set of data nodes for each additional iteration is the remaining members of the initial candidate set of the preceding iteration following the filtering of the preceding iteration; and the first set of features of each additional iteration is a superset of the first set of features of the preceding iteration, and the second set of features of each additional iteration is a superset of the second set of features of the preceding iteration.

Optionally, in accordance with the increasing sizes of the sets of features in each iteration, the first set of hash functions of each additional iteration is a superset of the first set of hash functions of the preceding iteration, and the second set of hash functions of each additional iteration is a superset of the second set of hash functions of the preceding iteration.

Advantageously, the iterative approach to reconciliation processing set out above afford the executing system the flexibility in scheduling to prevent reconciliation processing blocking resources from other processes which became due for scheduling during the reconciliation processing.

For example, it may be that the one or more additional iterations are delayed until a timing at which hardware resources assigned to performing the filtering and the full comparison processing are determined to be idle.

By reducing the requirement to perform reconciliation processing against the entire graph in one pass or one routine, the bottleneck caused by reconciliation processing of new nodes is eased. This improves performance of the system as a whole, and also enables the system operator to tend towards more complex and hence potentially more effective reconciliation algorithms, without worrying about adverse impact on system performance.

Resources being idle is used here as convenient notation for a range of operating states in which there is capacity to handle the extra processing burden imposed by reconciliation processing, at the resource responsible for the reconciliation processing. For example, it may be that reconciliation processing of the further subset is performed by the processor when there are no other pending tasks at the processor. Such decisions may be taken by a centralised workload scheduler (forming part of a database controller or otherwise) or locally at the processor itself.

Reconciliation processing compensates for heterogeneity of data by encoding into the data graph indications that different data items are semantically equivalent. Optionally, subsequent further actions such as the consolidation of equivalent data items into a single data item may be performed. As a further option, queries returning a data item may also return equivalents to the data item. The equivalence link may be utilised in a number of ways. The determination of where to add equivalence links is made in dependence upon the outcome of the full reconciliation processing. Many techniques are established for analysing the results of hash functions in order to generate values representing the likelihood that two data nodes are semantically equivalent, and the precise mechanism for performing said analysis and generation can be chosen based upon the particular implementation requirements. As an example of the procedure that may be followed in determining if and where to add equivalence links to the data graph:

Optionally, the full comparison processing generates a value representing the likelihood that the target data node and the remaining member are semantically equivalent; and if the generated value exceeds a semantic equivalence threshold, adding the target data node to the data graph, and also adding to the data graph an equivalence link denoting an equivalence relationship between the target data node and the remaining member.

In the event that the generated value does not exceed the semantic equivalence threshold, then the target data node may be added to the data graph without any equivalence links.

The procedures followed for using hash functions, such as locality sensitive hash functions, to compare data nodes may be as follows: the method includes extracting a value of each of a first set of features from the target data node and each member of the initial candidate set, and extracting a value of each of a second set of features from the target data node and each remaining member of the initial candidate set after the filtering process; and using a first set of hash functions to compare a first set of features extracted from both the member and the target data node comprises: for some or all hash function from the first set of hash functions, obtaining a first result from the execution of the hash function on the values of the first set of features of the target data node and a second result from the execution of the hash function on the values of the first set of features of the member, and comparing the first result with the second result; and/or using a second set of hash functions to compare a second set of features extracted from both the remaining member and the target data node comprises: for each hash function from the second set of hash functions, obtaining a first result from the execution of the hash function on the values of the second set of features of the target data node and a second result from the execution of the hash function on the values of the second set of features of the remaining member, and comparing the first result with the second result.

The outcome of the comparison in either case may be a value summarising the closeness of the hash function results. For example, embodiments may execute an algorithm which compares the distance between the first result and the second result in each case, and generates a value representing the average distance between results. On the other hand, it may that distance between results is not a relevant quantity, and all that is assessed is the number of matches out of the hash functions in the set. For example: the outcome of the partial comparison process is either an indication of whether or not the member satisfied a criterion for removal from the initial candidate set and/or a proportion of the first set of hash functions for which the first result matches the second result; and/or the outcome of the full comparison process is a proportion of the second set of hash functions for which the first result matches the second result.

Advantageously, such an outcome is simple to compute and therefore helps to suppress the overall processing burden imposed by the reconciliation processing.

Embodiments of another aspect of the invention include a controller for a data storage system configured to store a data graph, the data graph encoding a plurality of interconnected data nodes, the controller comprising a reconciliation processing module configured to receive a target data node for insertion to the data graph. The reconciliation processing module comprises: a filtering module configured to filter an initial candidate set of data nodes from among the plurality of interconnected data nodes by: performing a partial comparison process of a member of the initial candidate set with the target data node, the partial comparison process comprising comparing using a first set of hash functions to compare a first set of features extracted from both the member and the target data node; and if the outcome of the partial comparison process satisfies one or more removal criteria, removing: the member from the initial candidate set; and any other members from the initial candidate set assessed as having a semantic similarity with the member above a semantic similarity threshold; and repeating the performing, and removing on condition of the removal criterion being satisfied, until each remaining member of the initial candidate set has had the partial comparison process with the target data node performed, and outputting the initial candidate set when each remaining member of the initial candidate set has had the partial comparison process with the target data node performed. The reconciliation processing module further comprises: a full comparison processing module configured to perform full comparison processing between the target data node and each remaining member of the initial candidate set output by the filtering module, the full comparison processing comprising using a second set of hash functions to compare a second set of features extracted from both the remaining member and the target data node; wherein the second set of hash functions contains more hash functions than the first set of hash functions.

The controller could be realised as a centralised controller on a single computing resource, as a centralised controller by a number of computing resources cooperating, or as a controller among a plurality of equivalent controllers each on a respective computing resource in a distributed storage system. For example, it may be that the controller is provided by a program running on a computing resource in the storage system, and that one or more other computing resources are also running equivalent programs so that the database is accessible via a plurality of controllers. The controller may also be referred to as a database controller or a database manager.

Each of the functional modules may be realised by hardware configured specifically for carrying out the functionality of the module. The functional modules may also be realised by instructions or executable program code which, when executed by a computer processing unit, cause the computer processing unit to perform the functionality attributed to the functional module. The computer processing unit may operate in collaboration with one or more of memory, storage, I/O devices, network interfaces, sensors (either via an operating system or otherwise), and other components of a computing device, in order to realise the functionality attributed to the functional module. The modules may also be referred to as units, and may be steps or stages of a method, program, or process.

Embodiments of another aspect of the present invention provide a data storage system for storing a graph of data in which resources are represented as nodes of the graph, the data storage system comprising: a plurality of storage units each configured to store a segment of data from the graph of data; and a database controller as described above and/or elsewhere as an invention embodiment Of course, the data storage units are examples of computing resources, and may have processing functionality and control/management functionality in addition to storage.

The storage units may each be computing resources, for example, they may each include a storage unit, in addition to a processor, memory, and/or additional components such as a network interface card, a motherboard, input/output devices.

Embodiments of another aspect of the present invention provide a computer program which, when executed by a computer, causes the computer to perform a method embodying the present invention. Furthermore, embodiments of another aspect of the present invention include a computer program, which, when executed by one or more computers, causes the one or more computers to function as a database controller embodying the present invention. Computer programs embodying the present invention may be stored on a computer-readable storage medium, such as a non-transient storage medium, and may be provided as a single computer program or as a suite of sub-programs.

Though not essential in embodiments of the present invention, implementations may include systems in which the graph is stored in a distributed network of computing resources. The distributed network of computing resources (storage nodes) may include a system of more than one distinct storage units in communication with one another. An exemplary communication paradigm is peer-to-peer (P2P), hence it may be that the distributed network of computing resources is a peer-to-peer network of storage nodes. P2P is a distributed architecture that partitions tasks or workloads between peers. Peers (individual storage nodes or processes) are equally privileged, equipotent participants in the application. Each peer is configured to make a portion of its resources, such as processing power, disk storage or network bandwidth, directly available to other network participants, without the need for central coordination by servers or stable hosts. Peers can be considered to be both suppliers and consumers of resources, in contrast to a traditional client-server model where servers supply and clients consume. Advantageously, a P2P system can maintain large groups of storage nodes exchanging messages with a logarithmic communication cost.

Depending on the manner in which an embodiment of the present invention is implemented, it may be that reconciliation processing is performed simultaneously on more than one computing resource within the distributed network of computing resources, between the target data node and the nodes being stored on that computing resource and belonging to the subset of nodes for which reconciliation processing with the particular node is being performed.

Preferred features of the present invention will now be described, purely by way of example, with reference to the accompanying drawing, in which:-

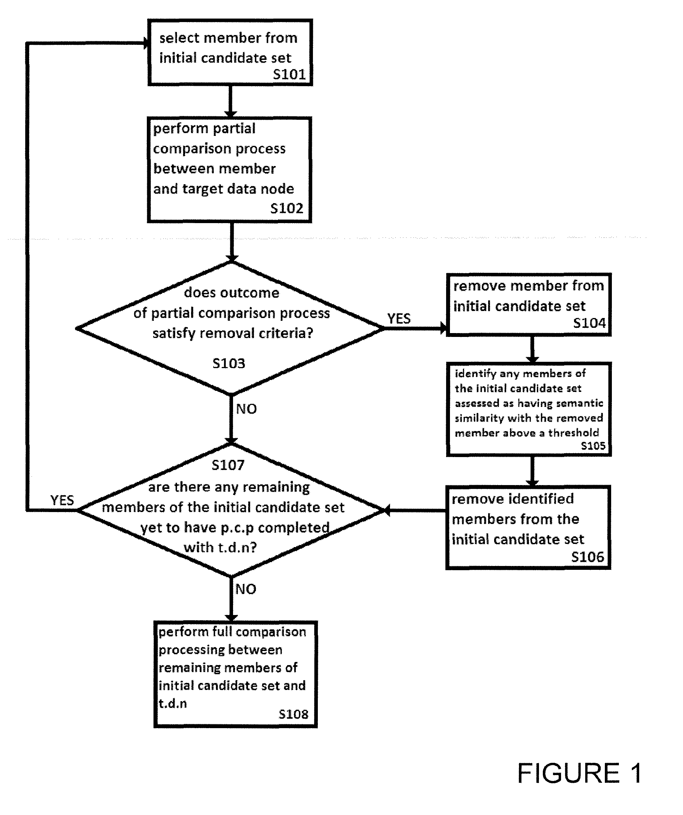

Figure 1 illustrates an overall procedure followed by embodiments.

Figure 1 illustrates an overall procedure followed by embodiments. Steps S101 to S107 represent a filtering procedure. Such a filtering procedure may be performed by a filtering module of a database controller. Step S108 represents a full comparison processing procedure. Such a full comparison processing procedure may be performed by a full comparison processing module of a database controller.

As an overview of an overall filtering procedure, given a collection of data items C (exemplary of the initial candidate set), a defined similarity measure $\alpha$, and a filtering f, and a query q, similarity search/comparison retrieves a set of items $S \subseteq C$ such that $\forall c \in S. (\alpha(c,q) \in f)$. The filtering mechanism can return either the top N candidates or all the candidates above a certain similarity threshold that satisfy the query q.

The computation of similarity or similarities of data nodes, which may be referred to as ontological entities (being concepts, properties and instances), may be based on high dimensional vectors of selected ontological or semantic features (exemplary of the first and second sets of features) extracted from the nodes (which jointly explicate the semantics of the entities). Locality sensitive hashing (LSH) can be applied for initial candidate pruning (i.e. as a basis for filtering) whose resulting sets are then subject to linear comparison (exemplary of full comparison processing). The initial pruning can significantly reduce the size of data set subject to linear comparison and therefore the filtering procedure can significantly reduce the time and processing resources required for reconciliation processing.

The filtering procedure begins at step S101, at which a member from the initial candidate set is selected for partial comparison processing with a target data node, the target data node being the data node that is being reconciled with the initial candidate set. The only restriction on selection is that it is a member for which partial comparison processing with the target data node has not yet been performed. Although data reconciliation is performed at the instance level , and therefore the initial candidate set from which a member is selected at step S101 may include only instance data nodes, the presence of a conceptual schema or model can play a critical role in candidate pruning. For example, extracted features may utilise properties of the conceptual schema or ontological model.

Step S101 outputs the selected member of the initial candidate set to step S102, at which partial comparison processing between the selected member and the target data node is performed. Partial comparison processing comprises using a first set of hash functions to compare a first set of features extracted from both the member and the target data node. The outcome of the comparison is output by step S102 to step S103.

Machine learning algorithms may be employed for either feature selection (finding the most useful ontological features and including those features in the first and/or second sets of features) or hash function selection (finding the right number of hash functions out of the hash function family).

The selection of a family of hash functions may be performed as follows:

- Fix the algorithm, but adjust the parameters of the algorithm. The parameter can be a defining parameter of the algorithm: for instance if c is a constant in some function f(X, c)=a, adjusting the value of c generates slightly different "f". The parameter can also be the input of algorithm: for instance if a subset of X's components in f(X)=a is systematically selected in order to get different way of project X to an integer.
- The purpose is to construct a large homogeneous algorithm to project a candidate and the target into integer numbers and then compare quickly the resulting integers instead of comparing the high-dimensional feature vectors (or subsets of the vectors).

As the first set of hash functions (those to be used in partial comparison processing), embodiments may utilise a subset m of the n hash functions selected for full comparison processing. The rationale is that after comparing the member with the target data node based on some or all of the first m/n hash functions (where m << *n* as the required number of hash functions, and m is the number of hash functions in the first set and n the number of hash functions in the second set), it is possible to estimate the probability of the two data nodes being found to be equivalent. Therefore, members can be identified which have a very low (eg. either below a threshold or the bottom fixed proportion) probability of being found to be equivalent to the target data node running the remaining (n - m) hash functions is avoided (based on confidence that a complete run of all hash functions will not deviate very much from the known results).

As an exemplary procedure for determining n, the number of hash functions in the second set of hash functions (those used for full comparison processing), the following rationale may be followed:

The overall number of hash functions is determined by two elements: the size of hash function groups (g) and the number of hash functions to be calculated on each feature (k). The overall number of hash function needed is n=g*k. So the procedure may include combining the results of k hash functions (with respect to a feature f) to get a composite feature/signature. Thus, for each data node, an overall of "g" families of hash function are then used to create a "g" dimensional space of each "f". More specifically, given an expected error margin "e", if "k" is fixed, g can be calculated as g = log e / log(1-t^k), wherein t is a predefined threshold and is configurable at a database administrator level. As an example, k can be relaxed, for example to k=1, and hence the total number of hash function families can be computed by:

$$g = \log e \; / \; \log(1\text{-}t).$$

This is merely an exemplary procedure for selecting a number of hash functions. In summary, the number of hash functions in the second set of hash functions n may be obtained using equation log e/log(1-t^k) where e is the expected recall, t a predefined threshold, and k the number of hash functions for each feature. An exemplary value of k is 1. The number of hash functions selected for the first set m is configurable by a database administrator and its selection represents a balance between processing overheads and confidence required to remove members from the initial candidate set.

Locality sensitive hashing at step S102 approximates the true similarity between two entities by computing signatures from a set of k features using a number of hash functions from the same hash function family, where k may represent a subset of all of the possible extracted features. In this case, a thorough comparison of the entire feature vectors is avoided and performed only for those that are absolutely necessary, because the first set of features may be smaller than the second set of features.

At step S103 it is determined whether or not the removal criteria are satisfied by the outcome of the partial comparison process. It may be that there is a single criterion which is either satisfied or not. Alternatively, there may be a plurality of criteria, of which a certain number must be satisfied for the removal criteria to be considered satisfied (for example, the certain number may be all, or at least one). Alternatively, the removal criteria may be staggered or staged, so that if a first removal criterion is not satisfied, further partial comparison processing is performed to determine whether or not additional removal criteria are satisfied.

An exemplary procedure for performing the partial comparison process S102 and determining whether or not the outcome of the partial comparison process satisfies the removal criteria S103 will now be set out. In this exemplary procedure, the partial comparison processing is performed in two stages, wherein after a first stage some members are deemed to have satisfied the removal criteria (and hence the partial comparison processing for those nodes is complete) and some are added to a list pending the second stage (and hence the partial comparison processing for those nodes is not yet completed). Those on the list pending the second stage are still considered to be members of the initial candidate set, although they may be subject to removal via step S106 or upon completion of their own partial comparison processing via step S104.

In the exemplary procedure:

- d denotes the data items to be reconciled (exemplary of the target data node), and may be represented by a vector of extracted features $v_d$ (exemplary of the first, and possibly also the second, set of features extracted from the target data node);
- I is the set of instance data that d is to be reconciled against (exemplary of the initial candidate set), where each item in $\alpha_i \in I$ (exemplary of a member of the initial candidate set) may be represented by a vector of extracted features $v_{\alpha i}$ (exemplary of the first, and possibly also the second, set of features extracted from the member),
- $\Omega$ is the full knowledge model (exemplary of the initial candidate set, but with the addition of the ontological model data or schema data);
- t is a predefined threshold which is configurable based on implementation requirements;
- p and q are real numbers between 0 and 1, wherein p is exemplary of the predetermined threshold probability, and q is exemplary of the semantic similarity threshold;
- $h_j \in H$ an arbitrary hash function chosen (possibly randomly) from a hash function family;
- semantic similarity (such as is assessed in step S105) is $\sigma()$;
- m/n indicates the number of hash functions performed as part of the partial comparison process relative to the number that will be performed as part of the full comparison process (i.e. exemplary of the size of the first set of hash functions relative to the size of the second set of hash functions).

In a first stage of the partial comparison processing, a list (wherein list is interpreted broadly as meaning a group rather than placing a limitation on the form in which the members or indications thereof are stored and maintained) is produced of members to progress to the second stage, and those not progressing are removed from the initial candidate set. The first stage finds the union of all $\alpha_i$ where one of a number of subsets from H generates the same results when executed on $\alpha_i$ as when executed on d.

The first stage can be executed as follows:

- For each of the number of subsets from the m hash functions, compute the hash results and terminate the iteration whenever the hash results for the subset of hash functions agree between d and $\alpha_i$, and add to the list to progress to the second stage;
- If no agreement is found for a predetermined upper limit of subsets (exemplary of a removal criterion), add $\alpha_i$ to the negative candidate set $C_{neg}$ (equivalent to removing $\alpha_i$ from the initial candidate set);
- Assess the semantic similarity or semantic correlation between other members $\alpha_k$ of the initial candidate set I and $\alpha_i$ and compare with threshold, if threshold exceeded also remove $\alpha_k$ from the initial candidate set i.e. if $\sigma_\Omega(\alpha_i, \alpha_k) > q$, add $\alpha_k$ to $C_{neg}$.

Once each member has either been added to $C_{neg}$ or added to the list to progress to the second stage, the second stage is begun. The list is effectively what is left of the initial candidate set after all data nodes added to $C_{neg}$ have been removed. In the second stage, further partial comparison processing is performed and the outcome assessed with relation to another removal criterion.

In the second stage of the partial comparison processing, results for the m hash functions in the first set are obtained for the target data node and the member ($\alpha_i$) for which partial comparison processing is being performed. An estimate is generated of the likelihood (pr) of d and $\alpha_i$ being considered equivalent at the full comparison processing stage (i.e. when the full n hash functions will be executed) based on only the m hash functions included in the first set.

The second stage can be summarised as follows:

if $pr[s(d, \alpha_i)|m/n] < p$, add $\alpha_i$ to $C_{neg}$

Again, addition to $C_{neg}$ is equivalent to removal from the initial candidate set, and indicates that no further reconciliation processing will be performed in respect of the member added to $C_{neg}$. The rationale behind the second stage is that it is possible to estimate the probability of whether "d" and "$\alpha_i$" agree with each other (i.e. will be found to be semantically equivalent) based on the m out of n hash functions, where m is much smaller than n (for example, between 0 and 10%, or 0 and 20% of n). When the probability pr is less than a threshold p (exemplary of a removal criterion being satisfied), which threshold can be pre-selected by the users or set as a parameter of the data graph, $\alpha_i$ is excluded from further comparison. In this case, the system avoids computing the remaining (n-m) hash results which would be required for the full comparison processing.

For example, the probability may be generated by performing a hypothesis test using a polynomial distribution, testing the hypothesis of obtaining the obtained level of agreement (i.e. x out of the total number of hash functions in the first set being matched) or less based on the assumption that the data nodes are equivalent. Alternatively, the probability may be generated by assessing (again using a polynomial distribution or equivalent) the likelihood of two randomly selected data nodes obtaining the obtained level of agreement or less (with one minus said likelihood being the indication for comparison with the threshold).

Once a member $\alpha_i$ has had its probability pr calculated and has satisfied the removal criteria, the semantic similarity or semantic correlation between other members $\alpha_k$ of the list for the second stage of partial comparison processing (that have not already been added to $C_{neg}$) is calculated and compared with threshold q. If the threshold q is exceeded then $\alpha_k$ is added to $C_{neg}$ i.e. if $\sigma_\Omega(\alpha_i, \alpha_k) > q$, add $\alpha_k$ to $C_{neg}$. For all semantically correlated $\alpha_k$, add $\alpha_k$ to $C_{neg}$, where $\sigma_\Omega(\alpha_i, \alpha_k) > q$. Any member not satisfying the removal criteria and not subsequently being added to $C_{neg}$ by virtue of semantic similarity to another member added to $C_{neg}$ is remaining after the filtering process and will be the subject of full comparison processing.

If the removal criteria are deemed to be satisfied by the outcome of the partial comparison process, then the flow proceeds to step S104. At step S104, the selected member (for which the partial comparison processing with the target data node satisfied the removal criteria) is removed from the initial candidate set.

At step S105, any members not yet removed from the initial candidate set are assessed for semantic similarity with the member removed at step S104. Members not yet removed from the initial candidate set comprises members for which partial comparison processing with the target data node is yet to be performed, and members for which the outcome of partial comparison processing did not satisfy the removal criteria at step S103. A threshold is applied to the assessments of semantic similarity and any members of the initial candidate set assessed as having a level of semantic similarity with the removed member in excess of a threshold are removed from the initial candidate set at step S106.

The removal of members assessed as having a level of semantic similarity with the removed member which is above a threshold level at step S106 is based on the assumption that when some entities have similarity with the target data node that is lower than a predefined threshold (assessed in the partial comparison processing), their semantically related entities can also be removed subject to a probability model. The probability model generates a value representing the likelihood of the member and the target data node being considered to be semantically equivalent in full comparison processing based on the similarity calculated in partial comparison processing, and can be used to set a threshold on how similar (or how closely semantically related) other members of the initial candidate set must be to the member in question to be removed as well. For such related entities, no hashing is required. For such semantically close entities, exclusion can done right away and no further hash computation is performed.

In implementation, the removal of members from the initial candidate list either due to satisfaction of removal criteria (at S104) or due to semantic similarity to a node which satisfied the removal criteria (at S106) may take various forms. The effect is that no further partial comparison processing or full comparison processing (i.e. no further reconciliation processing) is to be performed between the removed member and the target data node. This may take the form of removal from a list of data nodes pending full and partial comparison processing with the target data node. Alternatively or additionally, this may take the form of omission from a list being compiled of data nodes with which full comparison processing is to be carried out.

Alternatives to the straightforward comparison with a threshold in step S105 will now be discussed. The first example leverages the assumption that when a data item is semantically close to the member being removed from the initial candidate set, they will not present as a positive candidate. Such an assumption can be embodied with the following exemplar equation:

$$c^-(\alpha_k) = s(d, \alpha_i) \times (1 + log\,(\gamma \cdot \sigma(\alpha_i, \alpha_k) + e))$$

where $e$ is a sufficiently small number to avoid taking logarithm over 0 and $\gamma$ is the coefficient to adjust the significance of semantic correlation. $c^-$ is the negative candidacy or confidence of negative candidate membership of the given data item $\alpha_k$, and may be compared with a threshold to determine whether or not to remove $\alpha_k$ from the initial candidate list along with $\alpha i$. Basically, when $\sigma(\alpha_i, \alpha_k)$ is large (meaning the two data items are semantically similar), $c^-(\alpha_k)$ and $s(d, \alpha_i)$ are of positive coupling. If $\alpha_i$ becomes a negative candidate, so does $\alpha_k$. When $\sigma(\alpha_i, \alpha_k)$ is small, whether or not $\alpha_k$ should be considered as negative remains uncertain (most likely with a negative confidence value).

The second example measures the distance between $\alpha_k$ and $\alpha_i$, $\delta(\alpha_i, \alpha_k)$, and leverages the measured distance to assess the negative candidacy of $c^-(\alpha_k)$ (which again can be compared with a threshold to determine whether or not to remove $\alpha_k$ from the initial candidate list along with $\alpha_i$). $c^-(\alpha_k)$ and $s(d, \alpha_i)$ are of positive coupling with respect to $\delta(\alpha_i, \alpha_k)$. When $\delta(\alpha_i, \alpha_k)$ is large (towards 1 meaning $\alpha_i$ and $\alpha_k$ are semantically negation of each other), $\alpha_i$'s negative candidacy leads to the positive candidacy of its negation $\alpha_k$. Whether or not $\alpha_k$ is a positive candidate should remain uncertain regardless the values of $s(d, \alpha_i)$. When $\delta(d, \alpha_i)$ is small, confidence of $c^-(\alpha_k)$ should be significantly reduced. An exemplar realisation of such a relationship can be emulated with the following equation:

$$c^-(\alpha_k) = \gamma\delta(\alpha_i, \alpha_k) \times tan\left(s(d, a_i) \times \frac{\pi}{2}\right) + e'$$

Note that the distance measure $\delta(\alpha_i, \alpha_k)$ and similarity measure $\sigma(\alpha_i, \alpha_k)$ are not complementary. Both can be implemented in different way. For instance, $\sigma(\alpha_i, \alpha_k)$ can be based on the similarity measure over a hierarchical structure. $\Omega$ may be a graph with the existence of a minimum spanning tree as the conceptual hierarchy. For some data models, a single spanning tree can be guaranteed if an artificial top is introduced (should one do not exist already). For an ontology, the top is the common parent concept of all top level concepts, e.g. $\langle OWL{:}Thing \rangle$. For database schemata, the spanning forest can be converted into a tree by an artificial top.

The conceptual correlation of two data items can then be computed as follows:

$$\sigma(\alpha_i, \alpha_k) = -\log\frac{len(\alpha_i, \alpha_k)}{2 \times \max\left(len(\alpha_i, \top), len(\alpha_k, \top)\right)}$$

$len(x, \top)$ is the path length between top and the data item which is effectively the depth of x in the conceptual hierarchy. $len(x,y)$ is the length of the shortest path between x and y.

$\delta(\alpha_i, \alpha_k)$ should depend on whether or not a explicit negation or disjoint exists. For instance, if $\alpha_i \sqsubseteq neg(\alpha_k) \in \Omega$ or $\alpha_i$ n $\alpha_k = \emptyset \in \Omega$, $\delta(\alpha_i, \alpha_k) = 1$. Other existing semantic metric/distance measures can be used.

After step S106, or if the selected member was determined not to have satisfied the removal criteria at step S103, the flow proceeds to step S107. At step S107 a check is performed on whether or not there are any members remaining in the initial candidate set for which partial comparison processing with the target data node has not yet been completed. If the result of the check is that, yes, there are, then the flow returns to step S101 and one of those members remaining in the initial candidate set which has not yet had partial comparison processing with the target data node completed is selected. If there are either no remaining members in the initial candidate set, or if all of the remaining members have already had partial comparison processing with the target data node performed, then the flow proceeds to step S108.

At step S108 full comparison processing between remaining members of the initial candidate set and the target data node is performed. Full comparison processing between a pair of nodes is more computationally expensive than partial comparison processing between the same pair of nodes due to one or both of: more hash functions being executed; and more features for comparison being extracted. Full comparison processing is also characterised by resulting in a decision being made as to whether or not two data nodes are considered to be semantically equivalent. In contrast, partial comparison processing is characterised by a decision being made as to whether there is a sufficient likelihood of the member being found to be semantically equivalent to the target data node to justify executing full comparison processing. Exemplary of full comparison processing is doing a pair-wise linear comparison between the member remaining in the initial candidate set and the with the full list of n hash functions to compute the final similarity and decide whether the two are semantically equivalent.

Step S103 is equivalent to a step of determining whether or not the outcome of the partial comparison processing satisfies criteria for full comparison processing to be performed, and if so, positively adding the member to a list of data nodes pending full comparison processing. In this equivalent scenario, it should be noted that members can subsequently be removed from the list of data nodes pending full comparison processing by virtue of being deemed semantically similar to another member not satisfying the criteria for full comparison processing to be performed.

An embodiment will now be disclosed in which the reconciliation processing is performed in an incremental fashion, with the size of feature set used for comparing data nodes being increased at each iteration.

As in an ontology, there are normally different types of relationships among ontological entities and different types of attributes of the entities, one can apply the hashing on different feature vectors which will grow by including more semantic clues. By doing so, the dimensionality of initial feature vectors can be kept small.

For instance, the steps can be implemented as:

In a first iteration, feature vectors contain only those attributes from the parental entities reachable along the conceptual hierarchies;

In a second iteration, feature vectors contain all the attributes (this is a complete set of features); and

In a third iteration, feature vectors contain all object properties (edges connecting two resources including the data node).

Each step presents a stronger and finer pruning "power" over the previous step and thus higher computational cost due to the increased size of feature vectors.

As the features that are taken into consideration at a given step are a superset of those from previous step, it is guaranteed that instances removed in early step are not false negative when more evidences present.

The feature extraction can be easily done using standard text indexing method (e.g. TF-IDF) treating all the concept, property and instance names/values as proper strings.

The process may be conducted as follows:

Initially, the filtering and full comparison processing are performed as a first iteration of steps S101 to S108. Then, one or more additional iterations of the filtering and full comparison processing, S101-S108, are performed. In each additional iteration, the initial candidate set of data nodes for each additional iteration is the remaining members of the initial candidate set of the preceding iteration following the filtering of the preceding iteration. Optionally, the first set of features of each additional iteration is a superset of the first set of features of the preceding iteration, and the second set of features of each additional iteration is a superset of the second set of features of the preceding iteration. As a further option, it may be that, for each iteration, the first set of features and the second set of features are the same. The equivalence links resulting from the most recently performed full comparison processing are taken to be authentic, so that those added in previous iterations may be removed after subsequent iterations.

In embodiments of the present invention, knowledge, facts, and/or statements are represented by a graph of nodes and edges, where nodes are the entities being described or represented, and the edges are the relationships between those entities. Embodiments of the present invention may be configured to store graph data directly i.e. as nodes and edges. However, it may be that some other underlying data structure is employed.

As an exemplary underlying data storage structure, it may be that the data in the graph is encoded as triples each comprising a subject, a predicate, and an object, and the nodes of the graph are the subjects and objects of the triples, and the predicate of a triple denotes a link between the subject and the object of the triple.

Optionally, the triples may be Resource Description Framework (RDF) triples. Throughout this document, it should be understood that where specific references to "RDF triple(s)" are made, it is an exemplary form of triple, conforming to the RDF standard. Furthermore, references to "triple(s)" include the possibility that the triple in question is an RDF triple. Similarly, the RDF processors discussed elsewhere in this document are exemplary of processors used for interaction between the API wrapper and the stored data items.

The Resource Description Framework is a general method for conceptual description or modeling of information that is a standard for semantic modelling or semantic knowledge modelling. Standardising the modeling of information in a semantic network allows for interoperability between applications operating on a common semantic network. RDF maintains a vocabulary with unambiguous formal semantics, by providing the RDF Schema (RDFS) as a language for describing vocabularies in RDF.

Optionally, each of one or more of the elements of the triple (an element being the predicate, the object, or the subject) is a Uniform Resource Identifier (URI). RDF and other triple formats are premised on the notion of identifying things (i.e. objects, resources or instances) using Web identifiers such as URIs and describing those identified 'things' in terms of simple properties and property values. In terms of the triple, the subject may be a URI identifying a web resource describing an entity, the predicate may be a URI identifying a type of property (for example, colour), and the object may be a URI specifying the particular instance of that type of property that is attributed to the entity in question, in its web resource incarnation. The use of URIs enables triples to represent simple statements, concerning resources, as a graph of nodes and arcs representing the resources, as well as their respective properties and values. An RDF graph can be queried using the SPARQL Protocol and RDF Query Language (SPARQL). It was standardized by the RDF Data Access Working Group (DAWG) of the World Wide Web Consortium, and is considered a key semantic web technology. SPARQL allows for a query to consist of triple patterns, conjunctions, disjunctions, and optional patterns.

The triples provide for encoding of graph data by characterising the graph data as a plurality of subject-predicate-object expressions. In that context, the subject and object are graph nodes of the graph data, and as such are entities, objects, instances, or concepts, and the predicate is a representation of a relationship between the subject and the object. The predicate asserts something about the subject by providing a specified type of link to the object. For example, the subject may denote a Web resource (for example, via a URI), the predicate denote a particular trait, characteristic, or aspect of the resource, and the object denote an instance of that trait, characteristic, or aspect. In other words, a collection of triple statements intrinsically represents directional graph data. The RDF standard provides formalised structure for such triples.

Although the aspects (software/methods/apparatuses) are discussed separately, it should be understood that features and consequences thereof discussed in relation to one aspect are equally applicable to the other aspects. Therefore, where a method feature is discussed, it is taken for granted that the apparatus embodiments include a unit or apparatus configured to perform that feature or provide appropriate functionality, and that programs are configured to cause a computing apparatus on which they are being executed to perform said method feature.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

1. A method for reconciling a target data node with a data graph encoding a plurality of interconnected data nodes; the method comprising:

   filtering an initial candidate set of data nodes from among the plurality of interconnected data nodes by:

   performing a partial comparison process of a member of the initial candidate set with the target data node, the partial comparison process comprising using a first set of hash functions to compare a first set of features extracted from each of the member and the target data node; and
   if the outcome of the partial comparison process satisfies one or more removal criteria, removing:

   the member from the initial candidate set; and
   any other members from the initial candidate set assessed as having a semantic similarity with the member above a semantic similarity threshold; and

   repeating the performing, and removing on condition of the removal criterion being satisfied, until each remaining member of the initial candidate set has had the partial comparison process with the target data node completed;

the method further comprising:

performing full comparison processing between the target data node and each remaining member of the initial candidate set following the filtering, the full comparison processing comprising using a second set of hash functions to compare a second set of features extracted from both the remaining member and the target data node; wherein

the second set of hash functions contains more hash functions than the first set of hash functions.

**2.** A method according to claim 1, wherein

the partial comparison process of the member of the initial candidate set with the target data node comprises a subset result matching procedure including:

selecting a subset of hash functions from the first set of hash functions; and

obtaining the results of executing the subset of hash functions on the first set of features of the member and the results of executing the subset of hash functions on the first set of features of the target data node; wherein the subset result matching procedure is performed on a repeated basis selecting a different set of hash functions on each repetition for the same member, until:

the results obtained for the member and the results obtained for the target data node for the same subset of hash functions satisfy a matching criterion; or

a predetermined upper limit on the number of repetitions of the subset result matching procedure for a single member is reached; and

the removal criteria include one or more of the following:

the predetermined upper limit on the number of repetitions of the subset result matching procedure for a single member is reached for the member without satisfying the matching criterion; and

the matching criteria is satisfied, and an assessment of the aggregated results of the selected subsets of hash functions executed on the first set of features of the member compared with the results of the same hash functions executed on the first set of features of the target data node indicates that a probability of the member and the target data node being equivalent is below a predetermined threshold probability.

**3.** A method according to claim 2, wherein

If the matching criterion is satisfied by the subset results matching procedure for a member, then the member is added to a group for further partial comparison processing; and

the partial comparison process further comprises:

for each of the members added to the group for further partial comparison processing:

obtaining the results of executing the first set of hash functions on the first set of features of the member and obtaining the results of executing the first set of hash functions on the first set of features of the target data node, comparing the respective obtained results, and generating an indication of the probability of the member and the target node being equivalent based on the comparison, and if the indication is below a predetermined threshold probability a removal criterion is determined to have been satisfied.

**4.** A method according to any of the preceding claims, wherein

the first set of features and the second set of features are the same.

**5.** A method according to any of the preceding claims, wherein

the first set of hash functions is a subset of the second set of hash functions.

**6.** A method according to any of the preceding claims, wherein

the semantic similarity threshold is determined dynamically in dependence upon a probability of the member and the target data node being equivalent indicated by the partial comparison process.

**7.** A method according to any of the preceding claims, wherein

the filtering and full comparison processing are performed as a first iteration and the method further comprises one or more additional iterations of the filtering and full comparison processing, wherein:

the initial candidate set of data nodes for each additional iteration is the remaining members of the initial candidate set of the preceding iteration following the filtering of the preceding iteration; and

the first set of features of each additional iteration is a superset of the first set of features of the preceding iteration, and the second set of features of each additional iteration is a superset of the second set of features of the preceding iteration.

8. A method according to claim 7, wherein
the one or more additional iterations are delayed until a timing at which hardware resources assigned to performing the filtering and the full comparison processing are determined to be idle.

9. A method according to any of the preceding claims, wherein
the comparing the results of a second set of hash functions executed on the second of features extracted from the target data node and the remaining member generates a value representing the likelihood that the target data node and the remaining member are semantically equivalent; and
if the generated value exceeds a semantic equivalence threshold, adding the target data node to the data graph, and also adding to the data graph an equivalence link denoting an equivalence relationship between the target data node and the remaining member.

10. A method according to any of the preceding claims, wherein
the data graph comprises a first group of data nodes defining a data model and a second group of data nodes defining instances of the first group of nodes; and
the initial candidate set is the second group of data nodes.

11. A method according to any of the preceding claims, wherein
the method further comprises extracting a value of each of a first set of features from the target data node and each member of the initial candidate set, and extracting a value of each of a second set of features from the target data node and each remaining member of the initial candidate set after the filtering process; and
using a first set of hash functions to compare a first set of features extracted from both the member and the target data node comprises:

for each hash function from the first set of hash functions, obtaining a first result from the execution of the hash function on the values of the first set of features of the target data node and a second result from the execution of the hash function on the values of the first set of features of the member, and comparing the first result with the second result; and/or
using a second set of hash functions to compare a second set of features extracted from both the remaining member and the target data node comprises:

for each hash function from the second set of hash functions, obtaining a first result from the execution of the hash function on the values of the second set of features of the target data node and a second result from the execution of the hash function on the values of the second set of features of the remaining member, and comparing the first result with the second result.

12. A method according to claim 11, wherein
the outcome of the partial comparison process is a proportion of the first set of hash functions for which the first result matches the second result; and/or
the outcome of the full comparison process is a proportion of the second set of hash functions for which the first result matches the second result.

13. A controller for a data storage system configured to store a data graph, the data graph encoding a plurality of interconnected data nodes, the controller comprising a reconciliation processing module configured to receive a target data node for insertion to the data graph;
the reconciliation processing module comprising:

a filtering module configured to filter an initial candidate set of data nodes from among the plurality of interconnected data nodes by:

performing a partial comparison process of a member of the initial candidate set with the target data node, the partial comparison process comprising comparing using a first set of hash functions to compare a first set of features extracted from each of the member and the target data node; and
if the outcome of the partial comparison process satisfies one or more removal criteria, removing:

the member from the initial candidate set; and
any other members from the initial candidate set assessed as having a semantic similarity with the member above a semantic similarity threshold; and

repeating the performing, and removing on condition of the removal criterion being satisfied, until each remaining member of the initial candidate set has had the partial comparison process with the target data node performed, and outputting the initial candidate set when each remaining member of the initial candidate set has had the partial comparison process with the target data node completed;
the reconciliation processing module further comprising:

a full comparison processing module configured to perform full comparison processing between the target data node and each remaining member of the initial candidate set output by the filtering module, the full comparison processing comprising using a second set of hash functions to compare a second set of features extracted from both the remaining member and the target data node; wherein
the second set of hash functions contains more hash functions than the first set of hash functions.

14. A data storage system comprising one or more storage units configured, individually or collaboratively, to store a data graph, the data graph encoding a plurality of interconnected data nodes, and a controller according to claim 13.

15. A computer program which, when executed by one or a plurality of computing devices, causes the one or the plurality of computing devices to execute a method according to any of claims 1 to 12.


**Amended claims in accordance with Rule 137(2) EPC.**

1. A method for reconciling a target data node with a data graph encoding a plurality of interconnected data nodes, the target data node being data that is being added to the data graph or data that has been added to the data graph with reconciliation pending, the data graph representing knowledge by nodes representing entities and edges connecting nodes representing a relationship between the connected nodes, wherein each data node is the sum of all relationships represented by edges in the data graph than connect to the node, and the data graph comprises a first group of data nodes defining a data model and a second group of data nodes defining instances of the first group of nodes;
the method comprising:

filtering a candidate set of data nodes from among the plurality of interconnected data nodes, the candidate set of nodes being the nodes of the second group of data nodes, by:

performing a partial comparison process of a member of the candidate set with the target data node, the partial comparison process comprising: extracting a first set of features from each of the member of the candidate set and the target data node, each feature being a value of a predetermined property; executing each of a first set of hash functions on the first set of features extracted from the member of the candidate set to obtain a first result; executing each of the first set of hash functions on the first set of features extracted from the target data node to obtain a second result; and comparing the first result with the second result; and
if the outcome of the partial comparison process satisfies one or more removal criteria, removing:

the member from the candidate set; and
any other members from the candidate set assessed as having a semantic similarity with the member above a semantic similarity threshold;
and

repeating the performing, and removing on condition of the removal criteria being satisfied, until each remaining member of the candidate set has had the partial comparison process with the target data node completed;
the method further comprising:

performing full comparison processing between the target data node and each remaining member of the candidate set following the filtering, the full comparison processing comprising: extracting a second set of features from each of the remaining member of the candidate set and the target data node, each feature being a value of a predetermined property; executing each of a second set of hash functions on the first set of features extracted from the remaining member of the candidate set to obtain a third result; executing each of the second set of hash functions on the first set of features extracted from the target data node to obtain a fourth result; and comparing the third result with the fourth result to generate a value representing the likelihood that the target data node and the remaining member are semantically equivalent, and if the generated value exceeds a semantic equivalence threshold, adding the target data node to the data graph, and also adding to the data graph an equivalence link denoting an equivalence relationship between the target data node and the remaining member; wherein

the first set of hash functions is a subset of the second set of hash functions.

2. A method according to claim 1, wherein

the partial comparison process of the member of the candidate set with the target data node comprises a subset result matching procedure including:

selecting a subset of hash functions from the first set of hash functions; and
obtaining the results of executing the subset of hash functions on the first set of features of the member and the results of executing the subset of hash functions on the first set of features of the target data node;
wherein the subset result matching procedure is performed on a repeated basis selecting a different set of hash functions on each repetition for the same member, until:

the results obtained for the member and the results obtained for the target data node for the same subset of hash functions satisfy a matching criterion; or
a predetermined upper limit on the number of repetitions of the subset result matching procedure for a single member is reached; and
the removal criteria include one or more of the following:

the predetermined upper limit on the number of repetitions of the subset result matching procedure for a single member is reached for the member without satisfying the matching criterion; and
the matching criteria is satisfied, and an assessment of the aggregated results of the selected subsets of hash functions executed on the first set of features of the member compared with the results of the same hash functions executed on the first set of features of the target data node indicates that a probability of the member and the target data node being equivalent is below a predetermined threshold probability.

3. A method according to claim 2, wherein

If the matching criterion is satisfied by the subset results matching procedure for a member, then the member is added to a group for further partial comparison processing; and
the partial comparison process further comprises:

for each of the members added to the group for further partial comparison processing:

obtaining the results of executing the first set of hash functions on the first set of features of the member and obtaining the results of executing the first set of hash functions on the first set of features of the target data node, comparing the respective obtained results, and generating an indication of the probability of the member and the target node being equivalent based on the comparison, and if the indication is below a predetermined threshold probability a removal criterion is determined to have been satisfied.

4. A method according to any of the preceding claims, wherein

the semantic similarity threshold is determined dynamically in dependence upon a probability of the member and the target data node being equivalent indicated by the partial comparison process.

5. A method according to any of the preceding claims, wherein

the filtering and full comparison processing are performed as a first iteration and the method further comprises one or more additional iterations of the filtering and full comparison processing, wherein:

the candidate set of data nodes for each additional iteration is the remaining members of the candidate set of the preceding iteration following the filtering of the preceding iteration; and

the first set of features of each additional iteration is a superset of the first set of features of the preceding iteration, and the second set of features of each additional iteration is a superset of the second set of features of the preceding iteration.

**6.** A method according to claim 5, wherein
the one or more additional iterations are delayed until a timing at which hardware resources assigned to performing the filtering and the full comparison processing are determined to be idle.

**7.** A method according to any of the preceding claims, wherein
the method further comprises extracting a value of each of a first set of features from the target data node and each member of the candidate set, and extracting a value of each of a second set of features from the target data node and each remaining member of the candidate set after the filtering process; and
using a first set of hash functions to compare a first set of features extracted from both the member and the target data node comprises:

for each hash function from the first set of hash functions, obtaining a first result from the execution of the hash function on the values of the first set of features of the target data node and a second result from the execution of the hash function on the values of the first set of features of the member, and comparing the first result with the second result; and/or
using a second set of hash functions to compare a second set of features extracted from both the remaining member and the target data node comprises:

for each hash function from the second set of hash functions, obtaining a first result from the execution of the hash function on the values of the second set of features of the target data node and a second result from the execution of the hash function on the values of the second set of features of the remaining member, and comparing the first result with the second result.

**8.** A method according to claim 7, wherein
the outcome of the partial comparison process is a proportion of the first set of hash functions for which the first result matches the second result; and/or
the outcome of the full comparison process is a proportion of the second set of hash functions for which the first result matches the second result.

**9.** A controller for a data storage system configured to store a data graph, the data graph encoding a plurality of interconnected data nodes, the target data node being data that is being added to the data graph or data that has been added to the data graph with reconciliation pending, the data graph representing knowledge by nodes representing entities and edges connecting nodes representing a relationship between the connected nodes, wherein each data node is the sum of all relationships represented by edges in the data graph than connect to the node, and the data graph comprises a first group of data nodes defining a data model and a second group of data nodes defining instances of the first group of nodes, the controller comprising a reconciliation processing module configured to receive a target data node for insertion to the data graph;
the reconciliation processing module comprising:

a filtering module configured to filter a candidate set of data nodes from among the plurality of interconnected data nodes, the candidate set of nodes being the nodes of the second group of data nodes, by:

performing a partial comparison process of a member of the candidate set with the target data node, the partial comparison process comprising: extracting a first set of features from each of the member of the candidate set and the target data node, each feature being a value of a predetermined property; executing each of a first set of hash functions on the first set of features extracted from the member of the candidate set to obtain a first result; executing each of the first set of hash functions on the first set of features extracted from the target data node to obtain a second result; and
if the outcome of the partial comparison process satisfies one or more removal criteria, removing:

the member from the candidate set; and
any other members from the candidate set assessed as having a semantic similarity with the member above a semantic similarity threshold;
and

repeating the performing, and removing on condition of the removal criteria being satisfied, until each remaining member of the candidate set has had the partial comparison process with the target data node performed, and outputting the candidate set when each remaining member of the candidate set has had the partial comparison process with the target data node completed;
the reconciliation processing module further comprising:

a full comparison processing module configured to perform full comparison processing between the target data node and each remaining member of the candidate set output by the filtering module, the full comparison processing comprising: extracting a second set of features from each of the remaining member of the candidate set and the target data node, each feature being a value of a predetermined property; executing each of a second set of hash functions on the first set of features extracted from the remaining member of the candidate set to obtain a third result; executing each of the second set of hash functions on the first set of features extracted from the target data node to obtain a fourth result; and comparing the third result with the fourth result to generate a value representing the likelihood that the target data node and the remaining member are semantically equivalent, and if the generated value exceeds a semantic equivalence threshold, adding the target data node to the data graph, and also adding to the data graph an equivalence link denoting an equivalence relationship between the target data node and the remaining member; wherein
the first set of hash functions is a subset of the second set of hash functions.

10. A data storage system comprising one or more storage units configured, individually or collaboratively, to store a data graph, the data graph encoding a plurality of interconnected data nodes, and a controller according to claim 9.

11. A computer program which, when executed by one or a plurality of computing devices, causes the one or the plurality of computing devices to execute a method according to any of claims 1 to 8.

FIGURE 1

Europäisches
Patentamt

European
Patent Office

Office européen
des brevets

# EUROPEAN SEARCH REPORT

**Application Number**

EP 14 18 6396

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 731 021 A1 (FUJITSU LTD [JP]) 14 May 2014 (2014-05-14) * abstract * * * paragraph [0004] - paragraph [0011] * * paragraph [0058] - paragraph [0063] * ----- | 1-15 | INV. G06F17/30 |
| A | Bo Hu ET AL: "Towards Big Linked Data: A Large-Scale, Distributed Semantic Data Storage", International Journal of Data Warehousing and Mining, 5 December 2012 (2012-12-05), pages 19-43, XP055175339, Hershey DOI: 10.4018/ijdwm.2013100102 Retrieved from the Internet: URL:http://search.proquest.com/docview/1519617295 [retrieved on 2015-03-10] * page 169 - page 172 * ----- | 1-15 | |
| A | EP 2 674 875 A1 (FUJITSU LTD [JP]) 18 December 2013 (2013-12-18) * abstract * * * paragraph [0001] - paragraph [0006] * * paragraph [0029] - paragraph [0030] * ----- | 1-15 | TECHNICAL FIELDS SEARCHED (IPC) G06F |
| A | AVIGDOR GAL ET AL: "A framework for modeling and evaluating automatic semantic reconciliation", THE VLDB JOURNAL ; THE INTERNATIONAL JOURNAL ON VERY LARGE DATA BASES, SPRINGER, BERLIN, DE, vol. 14, no. 1, 1 March 2005 (2005-03-01), pages 50-67, XP019351969, ISSN: 0949-877X, DOI: 10.1007/S00778-003-0115-Z * the whole document * ----- | 1-15 | |

The present search report has been drawn up for all claims

| Place of search | Date of completion of the search | Examiner |
|---|---|---|
| The Hague | 13 March 2015 | de Castro Palomares |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ..............................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 18 6396

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2015

| Patent document cited in search report | | Publication date | Patent family member(s) | | Publication date |
|---|---|---|---|---|---|
| EP 2731021 | A1 | 14-05-2014 | NONE | | |
| EP 2674875 | A1 | 18-12-2013 | CN | 103488673 A | 01-01-2014 |
| | | | EP | 2674875 A1 | 18-12-2013 |
| | | | JP | 2013257874 A | 26-12-2013 |
| | | | US | 2013332490 A1 | 12-12-2013 |

EPO FORM P0459

For more details about this annex : see Official Journal of the European Patent Office, No. 12/82